# EUROPÄISCHE PATENTANMELDUNG

(11) **EP 2 757 184 A1**
(43) Veröffentlichungstag der Anmeldung: **23.07.2014**
(21) Anmeldenummer: 14151768.0
(22) Anmeldetag: 20.01.2014
(51) Int. Cl.: D03D 11/02, A47C 7/00, B60N 2/58

(54) **Bezugsstoff mit einer Verstärkungsseele zur Herstellung einer Kederverbindung**

(30) Priorität: 22.01.2013 DE 102013100597
(71) Anmelder: MBG Techbelt Innovation GmbH, 95213 Münchberg (DE)
(72) Erfinder: Miksch, Roxana, 63674 Altenstadt (DE)
(74) Vertreter: Pröll, Jürgen

(57) **Zusammenfassung**

Die Erfindung betrifft einen einlagig oder mehrlagig ausgeführten Bezugsstoff mit mindestens einem an einer Seite im Randbereich vorgesehenen schlauchförmigen Abschnitt mit einer eingesetzten Verstärkungsseele für die Herstellung einer Kederverbindung, wobei der Bezugsstoff (10) mindestens einen streifenförmigen, einlagigen oder zweilagigen, abgesetzten Übergangsbereich (11, 12) zum Ausgleich von Spannungen aufweist, dem sich als schlauchförmiger Abschnitt ein zweilagiger Aufnahmebereich (13) für die Verstärkungsseele (6) und diesem folgend mindestens ein streifenförmiger Abschlussbereich (14) definierter Breite anschließen, dessen Breite so gewählt ist, dass er mindestens abschnittsweise den Rand (15) einer Kederaufnahme oder Kederschiene bei Herstellung der Kederverbindung übersteht, wobei im eingesetzten Zustand der Abschlussbereich (14) umgelenkt ist und aus der Kederaufnahme oder Kederschiene hervorsteht.

## Beschreibung

Die Erfindung betrifft einen Bezugsstoff mit mindestens einem an einer Seite im Randbereich vorgesehenen, schlauchförmigen Abschnitt mit einer eingesetzten Verstärkungsseele für die Herstellung einer Kederverbindung.

Ein Bezugsstoff der gattungsgemäßen Art ist aus der DE 689 22 952 T2 bekannt. Dabei handelt es sich um einen maschinengestrickten Bezugsstoff zum Beziehen eines bepolsterten Gegenstandes. Der Bezugsstoff weist im Randbereich, der an den Gegenständen befestigt werden soll, Schlauchwarenteile auf, die Bestandteil einer Kederverbindung sind und in eine Kederschiene eingefügt oder auf Haken an dem Gegenstand gehängt werden können. Die Schlauchwarenteile sind zusammen mit dem Bezugsstoff einteilig gestrickt und bilden den Abschluss des jeweiligen Teils des Bezugsstoffes. Die Achse des einstückig gestrickten Schlauchwarenteils liegt parallel oder im rechten Winkel zu Stäbchen des Stoffstückes. Der Bezugsstoff weist bevorzugt eine Doppeljersey-Struktur auf. Der Schlauchwarenteil besteht aus einer oder mehreren schlaufenbildenden Maschenware(n) und ist mit einer Seele verstärkt. Diese bildet den Keder, der in eine Kederschiene zur Herstellung einer Kederverbindung eingesetzt werden kann, z. B. in ein Ω-förmiges Kederverbindungselement oder an Haken an dem Rahmen des Gegenstandes befestigbar ist.

Aus der DE 103 25 791 A1 ist ein aus Schussfaden und Kettfäden gewebtes Kederband zum Annähen an einen Bezugsstoff, insbesondere zum Festhaken eines als Polsterbezug ausgebildeten Bezugsstoffes an einem Autositz, mit einem eine Verstärkungsseele umschließenden Schlauchabschnitt bekannt, der einen einlagig gewebten Fahnenabschnitt zum Annähen an einen Bezugsstoff aufweist. Zur Erzielung einer befestigungsvorteilhaften Lösung ist fahnenabschnittsseitig an dem Schlauchabschnitt eine kettfadenfreie Schusszone über das Mehrfache des Abstandes von zwei Kettfäden im Fahnenabschnitt vorgesehen. Durch diese spezielle Zone sind Steckzuordnungen erleichternde Öffnungen für Befestigungshaken an dem Rahmen des Autositzes gegeben, und zwar auch bei durchgehendem, die gesamte Breite des Kederbandes erfassenden Schutzfaden. Um den Bezugsstoff befestigen zu können, ist es immer erforderlich, dass nach dem Zuschnitt das gewebte, streifenförmige Kederband mit dem Bezugsstoff vernäht wird bzw. an diesen das Kederband angenäht wird. Dabei ist das Kederband bzw. sind die Nähte sichtbar, was unschön wirken kann. Zumindest ist keine homogene Oberfläche gegeben.

Aus der DE 197 31 260 C1 sind ein gewebtes Kederband und ein Verfahren zum Herstellen desselben bekannt, das entlang eines Längsrandes mittels Kunststoff versteift ist und an einem Bezugsstoff angenäht werden kann, um diesen als Polsterbezug an einem Autositz festhaken zu können, zu welchem Zweck an dem Autositzrahmen Haken vorgesehen sind oder Kederausnehmungen oder eine Kederschiene, in die der Keder eingesetzt werden kann. Die Versteifung besteht aus einem flachen Kunststoffband, das zwischen den beiden Schichten eines zweilagigen Teilbereiches des Kederbandes eingearbeitet ist. Dadurch ergibt sich ein sortenreines, sehr stabiles Kederband, das auf eine Vorratsspule aufwickelbar ist. Dem zweilagigen Teilbereich schließt sich ein einlagiger, gewebter Teilbereich an. Die Schussfäden der beiden Lagen der Bereiche sind in einer gemeinsamen Ebene eingewebt. In dem einlagigen Bereich sind in einer Ausführung dickere Versteifungskettfäden, die sich mit Grundkettfäden abwechseln, vorgesehen. Auch dieses Kederband muss an einem Bezugsstoff, der hierüber befestigt und gespannt wird, auf Polstermöbeln oder anderen bepolsterten Sitzen, wie auch Autositzen oder Flugzeugsitzen oder anderen Sitzen in Land-, Wasserund Luftfahrzeugen, angenäht werden, so dass keine homogene Oberfläche des Bezugsstoffes gegeben ist. Zumindest sind die Nähte beim Festnähen des Kederbandes am Bezugsstoff und die Saumnaht des Bezugsstoffes am Kederband sichtbar.

Es hat sich gezeigt, dass die Nähtechnik, die für das Anbringen von Kederbändern an Bezugsstoffen erforderlich ist, zwar durch die Lösung gemäß der DE 689 22 952 T2 eliminiert wird bzw. nicht mehr erforderlich ist und auch ein in sich homogener Randabschnitt des Bezugsstoffes gegeben ist, so dass dieser beispielsweise auch um Sitzgestellholme oder Polstermöbelgestellholme oder anderen Teilen davon herumgezogen werden kann. Auch lässt sich der Bezugsstoff mit der Kederverstärkung einteilig herstellen, wodurch sich die Herstellungskosten reduzieren. Allerdings ist dies nur bei einer gestrickten Ausführung vorgesehen und lässt, da die Kederverstärkung in einem seitlichen Schlauchteil, das das Ende des Bezugsstoffes bildet, ein leichtes Auflösen einer Kederverbindung zum Wechseln des Bezugsstoffes oder beim Bespannen der Polsterung nicht zu. Des Weiteren hat sich gezeigt, dass Spannungsunterschiede im Bezugsstoff selbst nicht optimal ausgeglichen werden, insbesondere die Querkraftkomponenten, die auf die Verstärkung oder Seelen des Keders bei der Herstellung der Verbindung und nach deren Herstellung nicht ausgeglichen werden, so dass durch Sitzdruck entstehende Falten beim Aufstehen nicht optimal ausgeglichen werden.

GB 2 263 865 A offenbart eine gepolsterte Struktur. Ein Bezug weist an seinen unteren Enden jeweils einen schlauchförmigen Abschnitt auf, in welchen ein Streifen aufgenommen ist. Der schlauchförmige Abschnitt ist zweilagig ausgeführt. Der schlauchförmige Abschnitt mit dem Streifen wird in einen Schlitz eingesetzt, um den Bezug auf der gepolsterten Struktur zu halten, wobei der schlauchförmige Abschnitt nicht vollständig in den Schlitz eingesetzt werden muss.

DE 43 03 578 C1 offenbart ein gewebtes Befestigungsband, insbesondere zur Befestigung von Polsterbezügen auf Autositzen, das an der Unterseite des Bezugsstoffs angenäht wird und Öffnungen zum Einstecken von Befestigungshaken aufweist. Eine ungleiche Längung des Bandes bei der Herstellung, wird dadurch ausgeglichen, dass für Monofilfäden ein stark schrumpfendes Material verwendet wird. Nach dem Weben erfolgt dann eine Schrumpfungsbehandlung, bei der gezielt die Monofilfäden gekürzt werden, so dass das Band insgesamt gerichtet wird.

Die Verwendung von Kederbändern, die angenäht sind, führt zu weiteren Spannungsunterschieden zwischen Bezugsstoff und Kederband bei der Befestigung. Dies kann dazu führen, dass einzelne Fäden des Bezugsstoffes oder des Kederbandes überbeansprucht werden. Des Weiteren ist ein Herauslösen der Verstärkung aus einem Kederkanal nicht ohne unmittelbare Kraftausübung auf die Verstärkungsseele und den Bezugsstoff möglich.

Der Erfindung liegt die Aufgabe zu Grunde, hier Abhilfe zu schaffen und eine Technologie für Bezugsstoffe zum Einsatz zu bringen, die eine außerordentlich preiswerte Kederverbindung ermöglicht, die eine homogene Oberflächengestaltung sicherstellt, die auf Nähte gänzlich verzichtet, einen Spannungsausgleich bei hoher Stabilität der Kederverbindung und auch bei hohen Belastungen des Bezugsstoffes sicherstellt und auch eine leichte Auflösung der Kederverbindung im Bedarfsfall, insbesondere im Falle des Austausches des Bezugsstoffes, ermöglicht. Gelöst wird die Aufgabe durch Ausgestaltung des Bezugsstoffes gemäß der im Anspruch 1 angegebenen technischen Lehre, wonach der Bezugsstoff einlagig oder mehrlagig ausgeführt ist, mindestens einen streifenförmigen, einlagigen oder zweilagigen, abgesetzten Übergangsbereich aufweist, dem sich als schlauchförmiger Abschnitt ein zweilagiger Aufnahmebereich für die Verstärkungsseele und diesem folgend mindestens ein streifenförmiger Abschlussbereich definierter Breite anschließen, dessen Breite so gewählt ist, dass er mindestens abschnittsweise den Rand einer Kederaufnahme oder Kederschiene bei Herstellung der Kederverbindung übersteht.

Vorteilhafte Weiterbildungen der Erfindung sind in den Unteransprüchen im Detail angegeben.

Die vorliegende Erfindung versteht unter "Bezugsstoff" jegliche Art von textilem Gewebe, Gewirk, Gestrick, das maschinell herstellbar ist und über gepolsterte oder ungepolsterte Gegenstände oder über Kissen gezogen wird. Die Erfindung ist dabei nicht auf eine spezielle Ausführung des Bezugsstoffes, beispielsweise Velourstoff, beschränkt. Unter "Keder" wird in dieser Anmeldung die Randverstärkung eines Bezugsstoffes verstanden, die im Randbereich des Bezugsstoffes vorgesehen ist, so wie dies z. B. aus der eingangs genannten DE 689 22 952 T2 bekannt ist. Eine solche Randverstärkung kann beispielsweise in Kederaufnahmen in einem Rahmen eines Sitzes, z. B. eines Kraftfahrzeugsitzes, eines Flugzeugsitzes oder in dem Sitz eines anderen Land-, Wasser- oder Luftfahrzeuges, hineingedrückt werden, wenn die Rücken- oder Sitzfläche mit einem Bezugsstoff bespannt wird. Die entsprechenden Kederaufnahmen sind entweder in die Randzonen des Rahmens eingebracht oder sind in hieran befestigten Kederschienen vorgesehen. Solche Schienen können auch Führungen und Kammern für die Aufnahme des Keders aufweisen.

Als Verstärkungsseele können die Keder runde, eckige oder profilierte Kunststoff- oder Metallstäbe, ferner textile Gebinde aus einzelnen Fasern oder stabförmige Kunststofffasern aufweisen, die zu Bündeln zusammengefasst sind, um eine Längsflexibilität zu erreichen. Eine oder mehrere solcher Verstärkungsseelen können in den schlauchförmigen Abschnitt des Bezugsstoffes im Randbereich eingezogen oder eingearbeitet werden, wenn der Bezugsstoff hergestellt wird. Die Erfindung ist also nicht auf bestimmte Verstärkungsseelenausführungen beschränkt. Sie kann auch aus einer eingearbeiteten Materialverdickung, z. B. durch Einzug mehrerer Kettfäden (monofil oder multifil), hergestellt sein.

Durch die erfindungsgemäße Ausgestaltung des Bezugsstoffes durch Integration eines Keders in den Randbereich ist der an sich bekannte Vorteil gegeben, dass eine homogene Oberflächenstruktur des gesamten Bezugsstoffes geschaffen wird, dass keine zusätzlichen Kederbänder angenäht werden müssen und damit auf Näharbeit bei der Herstellung gänzlich verzichtet werden kann und damit eine kostengünstige Großserienfertigung, z. B. von Bezugsstoffen für Flugzeug- oder andere Fahrzeugsitze, möglich wird. Die spezielle Ausgestaltung des streifenförmigen Abschlussbereiches bietet darüber hinaus zusätzlich den Vorteil, dass eine verstärkte Klemmwirkung in dem Kederkanal gegeben ist, und bei entsprechender Ausbildung der Lagerstätte für den Kederkanal, beispielsweise in einem Rahmen eines Sitzes, der Abschlussbereich den Rand der Kederaufnahme mindestens partiell übersteht, so dass er beispielsweise mit einer Zange leicht ergreifbar ist, um die Kederverbindung wieder aufzulösen, falls ein Wechsel des Bezugsstoffes vorgenommen werden soll. Die Belastung bei der Auflösung der Kederverbindung erfolgt also nicht über die Fläche des Bezugsstoffes schlechthin, sondern ausschließlich nur über den Überstand des Abschlussbereiches, der den Rand der Kederaufnahme übersteht.

Es ist ersichtlich, dass beispielsweise bei einem Austausch eines Bezuges, sei er verschmutzt oder abgerieben wirkt, auf einfache Weise ein Entfernen des Bezuges von dem Sitz möglich ist, auch dann, wenn die Kederaufnahmen versteckt hinter Blenden am Rahmen des Sitzes angebracht sind. Die leichte Lösbarkeit ist aber auch dann gegeben, wenn es sich hier um einen Bezugsstoff handelt, der beispielsweise um ein Kissen gelegt ist, wobei die Kederaufnahme dann am anderen paarigen Ende des Bezugsstoffes angeordnet ist und der Keder in diesen eindrückbar ist. Bei der Kederaufnahme kann es sich beispielsweise um einen Längskanal mit Ω-förmigem Querschnitt aus Kunststoff handeln oder es kann auch eine Kederschiene vorgesehen sein, die einen Längsspalt mit Seitenwänden aufweist, die bei hohem Zug auf den Abschlussbereich ein Öffnen des Spaltes ermöglichen. Die Seitenwände eines Kederkanals können durchgehend gleiche Höhen aufweisen. Es ist aber auch möglich, eine Seitenwand abgesetzt zur anderen anzuordnen oder in der nicht bespannten Seitenwand Ausnehmungen vorzusehen, damit ein den Rand nicht überstehender Abschlussbereich partiell z. B. mit einer Zange erfasst werden kann.

In weiterer Ausgestaltung der Erfindung ist vorgesehen, dass der Abschlussbereich eine durch Kettfäden verstärkte, einlagige Versteifungszone enthält. Dies ist förderlich, um den Abschlussbereich, z. B. mit einer Zange, leichter erfassen zu können. Des Weiteren ist durch die Verstärkung aber auch sichergestellt, dass der Aufnahmebereich für die Verstärkungsseele nach außen hin unelastisch endet. Der Abschlussbereich ist vorzugsweise einlagig ausgebildet, so dass beispielsweise durch Schussfadentrennung sich der zweilagige Aufnahmebereich für die Verstärkungsseele auf einfache Weise realisieren lässt. Wie dies webtechnisch realisierbar ist, geht aus der eingangs genannten DE 197 31 260 C1 hervor. Diese Technologie, die dort bei einem Kederband zur Anwendung kommt, kann auch bei der Erstellung der Randzone des Flächengebildes, nämlich des Bezugsstoffes nach der Erfindung, eingesetzt werden.

Von Vorteil ist es ferner, wenn die Schuss- und/oder Kettfäden Kunststofffäden sind oder zumindest einige Schussfäden und Kettfäden aus Kunststoff bestehen, z. B. aus Polyester, so dass sie beim Zuschnitt der Außenkontur des Bezugsstoffes aus einem Flächenmaterial mittels Laser im Kantenbereich miteinander verschweißen, so dass eine geschlossene Abschlusskante entsteht.

Der aus zwei Lagen gebildete Aufnahmebereich, auch Kedertasche genannt, kann unterschiedliche Längen und Breiten aufweisen, so dass, je nach Wunsch, ein runder Kederstab oder ein flacher Kederstab einsetzbar ist. Dies hängt jeweils von der Ausbildung der Kederverbindung ab, die zur Anwendung kommen soll. Der entsprechende Stab kann auch mit eingewirkt werden, so dass ein nachträgliches Einschieben und damit ein gesonderter Arbeitsgang vermieden wird.

Auch hat sich als besonders vorteilhaft erwiesen, einen ein- oder zweilagigen Übergangsbereich zwischen dem Bezugsstoff zum Bespannen eines Gegenstandes und dem Aufnahmebereich für die Verstärkungsseele vorzusehen, damit Spannungen ausgeglichen werden können und eine ausreichende Elastizität auch dann gegeben ist, wenn keine elastischen Fäden in dem Bezugsstoff eingearbeitet sind.

In einer Ausführungsform ist vorgesehen, dass der Übergangsbereich mindestens eine streifenförmige zweilagige Zwischenzone zum Spannungsausgleich enthält. Es können aber auch mehrere Zonen, die beispielsweise durch Lagentausch voneinander getrennt sind, nacheinander vorgesehen sein. Diese Zonen werden unter Beachtung der Spannfläche des Bezugsstoffes gebildet und in den Randbereich des Bezugsstoffes in die Nähe des Aufnahmebereiches verlegt. Der Übergangsbereich kann aber auch zusätzlich oder anstelle einer zweilagigen Zwischenzone einen einlagigen Entlastungsbereich aufweisen, wie er beispielsweise aus der zuvor schon genannten DE 103 25 791 A1 als kettfadenfreie Schusszone bekannt ist. Vor dem einlagigen Entlastungsbereich, also in Richtung des Flächenmaterials des Bezugsstoffes, kann durch Einziehen von zusätzlichen Kettfäden auch eine streifenförmige Verstärkungszone vorgesehen sein, um eine Entkopplung des textilen Gewebes des Bezugsstoffes von dem Befestigungsbereich mit dem Keder zu erreichen.

Gemäß der Erfindung kann der Aufnahmebereich in Längsrichtung geradlinig verlaufen oder auch längs gebogen ausgeführt sein, was bedeutet, dass die eingesetzte Verstärkungsseele auch geradlinig oder gebogen verlaufend ausgeführt sein kann. Unter Berücksichtigung der gewünschten Kederverbindung müssen die Kederaufnahmen oder -kanäle entsprechend geradlinig oder gebogen ausgeführt sein, was gestalterische Vorteile aber auch Befestigungsvorteile, unter Berücksichtigung des Rahmenaufbaus, z. B. eines Sitzes, haben kann. Auch ist eine dreidimensionale Ausbildung der Kederverbindung möglich. Als Verstärkungsseele können verschiedenste Ausführungen zur Anwendung kommen. Eine solche kann beispielsweise aus einzelnen Kettfäden, aus einem Bündel von Kettfäden, einem runden oder polygonen Stab aus Kunststoff oder aus einem Draht oder aus einem Stabgebinde bestehen. Eine solche Verstärkungsseele ist grundsätzlich nachträglich einschiebbar. Sie kann aber auch in den Bezugsstoff eingearbeitet sein. Der Bezugsstoff selbst kann ein Gewebe, ein Gewirk oder ein Gestrick sein. Die Herstellung auf geeigneten Maschinen, mit denen die Randzonen veränderbar sind, sind hierfür einsetzbar.

Der Bezugsstoff selbst kann aus Natur- und/oder Kunststofffasern bestehen und sollte zur Bildung eines geschlossenen Randes mindestens miteinander verschmelzbare Kunststofffasern enthalten. Die Verschweißung kann auch unabhängig vom Zuschnitt mittels eines Lasers auch durch einen Schweißapparat erfolgen, der eine Erwärmung der Randzone ermöglicht.

Falls elastische Fäden als Kett- oder Schussfäden eingezogen sind, kann der gesamte Bezugsstoff auch elastisch ausgeführt werden, so dass unter Berücksichtigung der Kederverbindung ein gesicherter Halt einerseits gewährleistet und andererseits eine Rückstellung der Unterpolsterung nach Sitz- und Rücklehnenentlastung gegeben ist.

Die Schussfäden müssen in dem Abschlussbereich und in dem Befestigungsbereich nicht immer geradlinig zu den Kettfäden verlaufen. Sie können hierzu auch schräg verlaufend eingezogen sein. Dies kann insbesondere bei bogenförmigem Verlauf der Kederseele von Vorteil sein, um die darauf wirkenden Kräfte möglichst senkrecht einfließen lassen zu können.

Die Erfindung wird nachfolgend anhand der in der Zeichnung dargestellten Ausführungsbeispiele ergänzend erläutert.

In der Zeichnung zeigen:
- FIG 1: einen Schussschnitt durch den Randbereich eines Bezugsstoffes, der nach der Erfindung ausgestaltet ist,
- FIG 2: schematisch einen Teilausschnitt aus einem Rahmen eines Sitzmöbels mit einer Kederverbindung für den Bezugsstoff und
- FIG 3: ein weiteres Ausführungsbeispiel eines Bezugsstoffes mit einer Randzone, die nach der Erfindung ausgebildet ist.

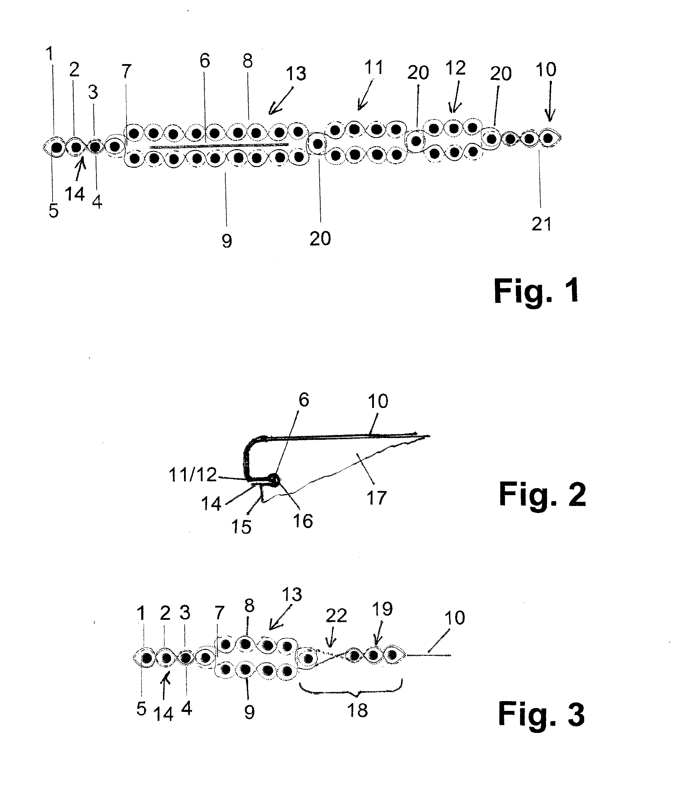

In FIG 1 ist ein Ausschnitt eines Bezugsstoffes mit erfindungsgemäß ausgebildeter Randzone dargestellt. Der Bezugsstoff 10 besteht aus einem einlagigen Bereich 21, dem sich ein zweilagiger Bereich 12 anschließt, der durch die jeweils drei oberen und drei unteren Kettfäden in der Breite definiert ist. Dieser Übergangsbereich 12 dient dem Spannungsausgleich nach der Herstellung einer Kederverbindung. Der Bereich wird eingangsseitig und ausgangsseitig durch je einen Lagentausch 20 beendet. Dem Lagentausch schließt sich sodann ein zweiter zweilagiger Übergangsbereich 11 an, dessen Breite durch 4 Kettfäden bestimmt ist. Auch dieser Bereich wird durch einen Lagentausch 20 abgeschlossen. Danach folgt ein Aufnahmebereich 13 für eine Verstärkungsseele 6.

Der zweilagige Aufnahmebereich 13 weist eine obere Lage 8 und eine untere Lage 9 auf. Diese Lagen 8 und 9 bilden eine Kedertasche, so dass unterschiedliche Verstärkungsseelen einschiebbar sind. Die Gesamtbreite wird bestimmt durch die Aneinanderreihung und Bindung der Kettfäden 5 durch die Schussfäden 1, 2, 3 und 4. Die Kettfäden 5 weisen im Ausführungsbeispiel gleiche Querschnitte auf. Sie können aber auch abweichend voneinander unterschiedliche Durchmesser aufweisen, um definierte Eigenschaften des Bezugsstoffes im Randbereich zu erzielen. Beispielsweise kann durch einen stärkeren monofilen Faden eine steifere Zone innerhalb eines Bereiches hergestellt werden. Dem Aufnahmebereich 13, der durch einen weiteren Lagentausch 20 abgeschlossen ist, schließt sich sodann ein Abschlussbereich 14 an, der durch die vier Kettfäden in seiner Breite bestimmt ist. Die im Randbereich gegebene stabile einheitliche Bindung führt dazu, dass alle Schussfäden derselben Belastung ausgesetzt sind, wenn die Trennung in zwei Einzellagen 8 und 9 zur Bildung des Aufnahmebereiches 13 vollzogen wird. Des Weiteren ist ein relativ unelastischer Abschlussstreifen 14 durch die gegebene Breite gegeben, so dass in gewünschter Weise die elastischen Wirkungen lediglich zur Seite des Bezugsstoffes 10 hin gegeben sind. Die beiden Lagen 8 und 9 sind durch die Schussfadentrennung 7 gegeben und bilden eine beschickbare Öffnung, in die eine Kederseele 6 eingeschoben werden kann. Um einen Spannungsausgleich zu erzielen, sind die beiden Bereiche 11 und 12 zwischen dem einlagigen Gewebe 21 des Bezugsstoffes 10 und dem Aufnahmebereich 13 vorgesehen. Hierüber werden Spannungen ausgeglichen und es wird erreicht, dass nach Sitz- und Druckentlastung des Bezugsstoffes eine Rückbildung in gewünschter Weise erfolgt.

FIG 2 zeigt vereinfacht einen Auszug aus einem Rahmen 17, z. B. eines Flugzeugsitzes, an dem der Bezugsstoff 10 mittels einer Kederverbindung fixiert ist. Dazu wird der Keder 6 in einer Kederaufnahme 16, die als Ω-förmiger Kanal ausgebildet ist, hineingedrückt. Es ist ersichtlich, dass dabei zum einen der Aufnahmebereich 13 in die Ausnehmung klemmend eingreift und zum anderen aber auch Teile der Abschnitte 11 und 12 und der Abschlussbereich 14, der den Rand 15 des Rahmens, und damit den des Kederkanals, übersteht. Dies kann auch abschnittsweise durch Ausnehmungen im Rand 15 vorgesehen sein. Die Kederverbindung kann durch eine Verkleidung verdeckt sein. Es ist aus der FIG 2 ersichtlich, dass der Abschlussbereich 14 den Rand 15 so weit übersteht, dass er beispielsweise zum Lösen der Kederverbindung mittels einer Zange leicht erfassbar ist, wodurch der Austausch eines Bezugsstoffes 10 erleichtert wird.

In FIG 3 ist ein weiteres Ausführungsbeispiel eines Bezugsstoffes 10 dargestellt, das abweichend von dem Ausführungsbeispiel in FIG 1 einen Aufnahmebereich 13 aufweist, dem sich in Richtung des Bezugsstoffabschnittes 10 ein Entlastungsbereich 18, bestehend aus einer Verstärkungszone 19, beispielsweise durch zusätzliches Einziehen von zusätzlichen Kettfäden gebildet, und einer sich anschließenden kettfadenfreien Schusszone 22, anschließt. Diese Schusszone 22 stellt eine hohe Elastizität sicher und damit einen Spannungsausgleich zwischen dem Aufnahmebereich 13 und dem Bezugsstoff 10. Dem Aufnahmebereich 13, der eine geringere Breite als der in FIG 1 aufweist und durch nur vier Kettfäden in der Breite vorgegeben ist, schließt sich sodann der Abschlussbereich 14 an, der entsprechend FIG 1 ausgebildet ist.

Grundsätzlich können solche Verbindungstechniken in allen Randbereichen eines Zuschnittes eines textilen Flächengebildes vorgesehen sein. Auch können in die Kedertaschen kleinere Lagentäusche eingebaut werden. Das Einfügen der Kederseele in die Kedertasche kann nach dem Einritzen der Tasche oder nach dem Umschlagen eines offenen Endes erfolgen, wenn entsprechende Nahtzugaben vorgesehen sind. Auch ist ein Verschließen, beispielsweise durch Verkleben oder Verschweißen, möglich.

Sämtliche Bindungen des Gewebes sind in der Maschine durch den Belastungsgrad anpassbar, so dass eine einfache Herstellung sichergestellt ist. Das obere Ende der Kedertasche wird mit Bindungen so ausgelegt, dass die Kraftbelastung der ansetzenden Trageecken sich möglichst gut im Gewebe verteilt. Aber auch hier bleiben dem Fachmann alle Möglichkeiten offen, um eine Anpassung an die Belastung des Bezugsstoffes und der Verbindungsart vornehmen zu können.

### Bezugszeichenliste

- 1: Schussfaden
- 2: Schussfaden (Übergangsbereich)
- 3: Schussfaden
- 4: Schussfaden
- 5: Kettfaden
- 6: Verstärkungsseele (Kederseele/Keder)
- 7: Schussfadentrennung
- 8: obere Lage
- 9: untere Lage
- 10: Bezugsstoff
- 11: Übergangsbereich
- 12: Übergangsbereich (zweilagiger Bereich)
- 13: Aufnahmebereich
- 14: Abschlussbereich
- 15: Rand
- 16: Kederaufnahme
- 17: Auszug eines Rahmens
- 18: Entlastungsbereich
- 19: Verstärkungszone
- 20: Lagentausch
- 21: Bezugsstoffbereich (einlagiger Bereich/Gewebe)
- 22: Schusszone

## Patentansprüche

1. Einlagig oder mehrlagig ausgeführter Bezugsstoff mit mindestens einem an einer Seite im Randbereich vorgesehenen schlauchförmigen Abschnitt mit einer eingesetzten Verstärkungsseele für die Herstellung einer Kederverbindung, wobei der Bezugsstoff (10) mindestens einen streifenförmigen, einlagigen oder zweilagigen, abgesetzten Übergangsbereich (11, 12) zum Ausgleich von Spannungen aufweist, dem sich als schlauchförmiger Abschnitt ein zweilagiger Aufnahmebereich (13) für die Verstärkungsseele (6) und diesem folgend mindestens ein streifenförmiger Abschlussbereich (14) definierter Breite anschließen, dessen Breite so gewählt ist, dass er mindestens abschnittsweise den Rand (15) einer Kederaufnahme (16) oder Kederschiene bei Herstellung der Kederverbindung übersteht, wobei im eingesetzten Zustand der Abschlussbereich (14) umgelenkt ist und aus der Kederaufnahme (16) oder Kederschiene hervorsteht.

2. Bezugsstoff nach Anspruch 1, **dadurch gekennzeichnet, dass** der Abschlussbereich (14) eine durch Kettfäden (5) verstärkte einlagige Versteifungszone enthält.

3. Bezugsstoff nach Anspruch 1, **dadurch gekennzeichnet, dass** der Übergangsbereich (11, 12) mindestens eine streifenförmige zweilagige Zwischenzone zum Spannungsausgleich enthält.

4. Bezugsstoff nach Anspruch 1 oder 3, **dadurch gekennzeichnet, dass** der Übergangsbereich (11, 12) an der dem Aufnahmebereich zugewandten Seite einen einlagigen Entlastungsbereich (18) aufweist.

5. Bezugsstoff nach Anspruch 4, **dadurch gekennzeichnet, dass** vor dem einlagigen Entlastungsbereich (18) eine durch Einziehen von zusätzlichen Kettfäden streifenförmige Verstärkungszone (19) vorgesehen ist und dass vor dem Aufnahmebereich (13) eine kettfadenfreie Schusszone (22) über das Mehrfache des Abstandes von zwei Kettfäden im Bezugsstoffbereich (21) vorgesehen ist.

6. Bezugsstoff nach Anspruch 1, **dadurch gekennzeichnet, dass** der Aufnahmebereich (13) in Längsrichtung gradlinig oder gebogen ausgeführt ist und die Verstärkungsseele (6) zur Querschnittsvergrößerung für die Herstellung der Kederverbindung, aus Kettfäden, einem Rund- oder polygonen Stab aus Kunststoff oder aus einem Draht oder einem Stabgebinde besteht und dass die Verstärkungsseele während der Herstellung des Bezugsstoffes eingearbeitet oder nachträglich in den Aufnahmebereich (13) einschiebbar ist.

7. Bezugsstoff nach Anspruch 1, **dadurch gekennzeichnet, dass** der Bezugsstoff (10) ein Gewebe, Gewirk oder ein Gestrick ist.

8. Bezugsstoff nach Anspruch 1 oder 7, **dadurch gekennzeichnet, dass** der Bezugsstoff (10) aus Naturund/oder Kunststofffasern besteht und mindestens miteinander verschmelzbare Kunststofffasern enthält und dass die Schuss- (1, 2, 3, 4) und/oder Kettfäden (5) oder Fäden des äußeren Randbereiches miteinander verschweißt sind.

9. Bezugsstoff nach Anspruch 1, **dadurch gekennzeichnet, dass** elastische Fäden als Kett- und/oder Schussfäden eingezogen sind.

10. Bezugsstoff nach Anspruch 1, **dadurch gekennzeichnet, dass** in den streifenförmigen Bereichen (11, 12, 13, 18) die Schussfäden (1, 2, 3, 4) gradlinig oder schräg verlaufend verlegt sind.

11. Bezugsstoff nach Anspruch 1, **dadurch gekennzeichnet, dass** die zweilagigen Bereiche (11, 12, 13) durch Lagentausch (20) der Schussfäden (1, 2, 3, 4) enden.

## Geänderte Patentansprüche

### Geänderte Patentansprüche gemäss Regel 137(2) EPÜ.

**1.** Einlagig oder mehrlagig ausgeführter Bezugsstoff mit mindestens einem an einer Seite im Randbereich vorgesehenen zweilagigen schlauchförmigen Abschnitt mit einer eingesetzten Verstärkungsseele für die Herstellung einer Kederverbindung, **dadurch gekennzeichnet, dass** der Bezugsstoff (10) mindestens einen streifenförmigen, zweilagigen, abgesetzten Übergangsbereich (11, 12) zum Ausgleich von Spannungen aufweist, wobei der Übergangsbereich (11, 12) mindestens eine streifenförmige zweilagige Zwischenzone zum Spannungsausgleich enthält, dem sich als schlauchförmiger Abschnitt der zweilagige Aufnahmebereich (13) für die Verstärkungsseele (6) und diesem folgend mindestens ein streifenförmiger Abschlussbereich (14) definierter Breite anschließen, dessen Breite so gewählt ist, dass er mindestens abschnittsweise den Rand (15) einer Kederaufnahme (16) oder Kederschiene bei Herstellung der Kederverbindung übersteht, wobei im eingesetzten Zustand der Abschlussbereich (14) umgelenkt ist und aus der Kederaufnahme (16) oder Kederschiene hervorsteht.

**2.** Bezugsstoff nach Anspruch 1, **dadurch gekennzeichnet, dass** der Abschlussbereich (14) eine durch Kettfäden (5) verstärkte einlagige Versteifungszone enthält.

**3.** Bezugsstoff nach Anspruch 1, **dadurch gekennzeichnet, dass** der Übergangsbereich (11, 12) an der dem Aufnahmebereich zugewandten Seite einen einlagigen Entlastungsbereich (18) aufweist.

**4.** Bezugsstoff nach Anspruch 3, **dadurch gekennzeichnet, dass** vor dem einlagigen Entlastungsbereich (18) eine durch Einziehen von zusätzlichen Kettfäden streifenförmige Verstärkungszone (19) vorgesehen ist und dass vor dem Aufnahmebereich (13) eine kettfadenfreie Schusszone (22) über das Mehrfache des Abstandes von zwei Kettfäden im Bezugsstoffbereich (21) vorgesehen ist.

**5.** Bezugsstoff nach Anspruch 1, **dadurch gekennzeichnet, dass** der Aufnahmebereich (13) in Längsrichtung gradlinig oder gebogen ausgeführt ist und die Verstärkungsseele (6) zur Querschnittsvergrößerung für die Herstellung der Kederverbindung, aus Kettfäden, einem Rund- oder polygonen Stab aus Kunststoff oder aus einem Draht oder einem Stabgebinde besteht und dass die Verstärkungsseele während der Herstellung des Bezugsstoffes eingearbeitet oder nachträglich in den Aufnahmebereich (13) einschiebbar ist.

**6.** Bezugsstoff nach Anspruch 1, **dadurch gekennzeichnet, dass** der Bezugsstoff (10) ein Gewebe, Gewirk oder ein Gestrick ist.

**7.** Bezugsstoff nach Anspruch 1 oder 6, **dadurch gekennzeichnet, dass** der Bezugsstoff (10) aus Natur- und/oder Kunststofffasern besteht und mindestens miteinander verschmelzbare Kunststofffasern enthält und dass die Schuss- (1, 2, 3, 4) und/oder Kettfäden (5) oder Fäden des äußeren Randbereiches miteinander verschweißt sind.

**8.** Bezugsstoff nach Anspruch 1, **dadurch gekennzeichnet, dass** elastische Fäden als Kett- und/oder Schussfäden eingezogen sind.

**9.** Bezugsstoff nach Anspruch 1, **dadurch gekennzeichnet, dass** in den streifenförmigen Bereichen (11, 12, 13, 18) die Schussfäden (1, 2, 3, 4) gradlinig oder schräg verlaufend verlegt sind.

**10.** Bezugsstoff nach Anspruch 1, **dadurch gekennzeichnet, dass** die zweilagigen Bereiche (11, 12, 13) durch Lagentausch (20) der Schussfäden (1, 2, 3, 4) enden.
